# EUROPÄISCHE PATENTANMELDUNG

(11) **EP 1 587 107 A2**
(43) Veröffentlichungstag der Anmeldung: **19.10.2005**
(21) Anmeldenummer: 05015601.7
(22) Anmeldetag: 28.01.1999
(51) Int. Cl.: G11B 27/00, G11B 19/00, G11B 15/68, G11B 17/22

(54) **Datenspeichereinrichtung**

(30) Priorität: 13.03.1998 DE 19811034
(62) Teilanmeldung aus: 99101827.6
(71) Anmelder: GRAU DataStorage AG, 73529 Schwäbisch Gmünd (DE)
(72) Erfinder: Lechner, Ulrich, 86732 Oettingen (DE)
(74) Vertreter: Hoeger, Stellrecht & Partner Patentanwälte

(57) **Zusammenfassung**

Um eine Datenspeichereinrichtung, umfassend einen Archivspeicher für Datenträgerkassetten, mit mindestens einer Schreib-/Leseeinrichtung und mit einer Übergabeeinrichtung, und ferner umfassend eine Datenspeichersteuerung, welche die Schreib-/Leseeinrichtung und die Übergabeeinrichtung zur Speicherung von Daten steuert und welche mit einem Rechner in Datenaustauschverbindung steht, zu schaffen, mit welcher ein möglichst effizienter Datenzugriff mit dem Rechner möglich ist, wird vorgeschlagen, daß die Datenspeichereinrichtung zusätzlich zum Archivspeicher mindestens einen Festplattenspeicher aufweist, daß die Datenspeichersteuerung den Festplattenspeicher und den Archivspeicher parallel betreibt, daß die Datenspeichersteuerung mit dem Archivspeicher und dem mindestens einen Festplattenspeicher zusammen ein als eine Speichereinheit installierbares Gerät bilden, welches mit dem Rechner wie eine einzige Speichereinheit kommuniziert.

## Beschreibung

Die Erfindung betrifft eine Datenspeichereinrichtung, umfassend einen Archivspeicher mit einer Aufbewahrungseinheit für eine Vielzahl von Datenträgerkassetten, mit mindestens einer Schreib-/Leseeinrichtung für die Datenträgerkassetten und mit einer Übergabeeinrichtung, mit welcher eine Übergabe einzelner Datenträgerkassetten aus der Aufbewahrungseinheit in die Schreib-/Leseeinrichtung und umgekehrt durchführbar ist, und ferner umfassend eine Datenspeichersteuerung, welche die Schreib-/Leseeinrichtung und die Übergabeeinrichtung zur Speicherung von Daten steuert und welche mit einem Rechner in Datenaustauschverbindung steht, um von diesem übergebene Daten zu speichern oder im Datenspeicher gespeicherte Daten dem Rechner zur Verfügung zu stellen.

Derartige Datenspeichereinrichtungen sind aus dem Stand der Technik bekannt. Bei diesen besteht das Problem, daß dadurch, daß die Daten unmittelbar auf Datenträgerkassetten geschrieben werden, die Geschwindigkeit des Zugriffs auf unterschiedliche Datensätze begrenzt ist.

Der Erfindung liegt daher die Aufgabe zugrunde, eine Datenspeichereinrichtung zu schaffen, mit welcher ein möglichst effizienter Datenzugriff mit dem Rechner möglich ist.

Diese Aufgabe wird bei einer Datenspeichereinrichtung der eingangs beschriebenen Art erfindungsgemäß dadurch gelöst, daß die Datenspeichereinrichtung zusätzlich zum Archivspeicher mindestens einen Festplattenspeicher zur Speicherung von mit dem Rechner auszutauschenden Daten aufweist, daß die Datenspeichersteuerung den Festplattenspeicher und den Archivspeicher parallel betreibt, daß die Datenspeichersteuerung mit dem Archivspeicher und dem mindestens einen Festplattenspeicher zusammen ein als eine Speichereinheit installierbares Gerät bilden, in welchem eine Langzeitspeicherung der Daten mittels der Datenträgerkassetten erfolgt und welches mit dem Rechner wie eine einzige Speichereinheit kommuniziert.

Der Vorteil der erfindungsgemäßen Datenspeichereinrichtung ist darin zu sehen, daß diese als eine Einheit installierbares Gerät ausgebildet ist, welches auch hinsichtlich der Kommunikation mit dem Rechner wie eine einzige Speichereinheit arbeitet und somit einfach an einen Rechner angeschlossen werden kann. Der Vorteil dieser Lösung ist ferner auch darin zu sehen, daß dem Benutzer ein eine Einheit darstellendes Gerät zur Verfügung steht, in welchem der Archivspeicher, der Festplattenspeicher und die Datenspeichersteuerung sowohl hinsichtlich der Hardware als auch der Software fest installiert sind, so daß der Einsatz dieser Datenspeichereinrichtung keinerlei Kenntnisse über die Handhabung der Datenspeicherung in den beiden völlig unterschiedlichen Speicherarten, nämlich dem Archivspeicher und dem Festplattenspeicher, für den Betrieb der Datenspeichereinrichtung erforderlich macht.

Damit ist die erfindungsgemäße Datenspeichereinrichtung einfach zu installieren, da die Datenspeichersteuerung mit dem Rechner wie ein einziger üblicher Speicher kommuniziert, intern jedoch in der Lage ist, auf dem Festplattenspeicher gespeicherte Daten auf die Datenträgerkassetten als kostengünstiges und für große Datenmengen geeignetes Speichermedium umzusetzen.

Besonders günstig ist es, wenn die Datenspeichersteuerung den Archivspeicher und den Festplattenspeicher derart betreibt, daß diese mit dem Rechner einen Datenaustausch in der Größenordnung von mit einem Festplattenspeicher entsprechenden Datenaustauschraten zulassen.

Mit Datenaustauschraten in der Größenordnung von denen eines üblichen Festplattenspeichers ist einerseits die gewünschte schnelle Kommunikation mit dem Rechner möglich und andererseits aber eine Langzeitspeicherung von Daten mittels der Datenträgerkassetten durchführbar, wodurch einerseits eine erhöhte Datensicherheit gewährleistet und andererseits die Speicherung großer Datenmengen kostengünstig möglich ist.

Vorzugsweise arbeitet die Datenspeichersteuerung dabei so, daß bei nicht bereits in der Schreib-/Leseeinrichtung liegender Datenträgerkassette mit dem Rechner ausgetauschte Daten auf dem Festplattenspeicher zwischengespeichert werden und entweder vor der Datenkommunikation mit dem Rechner oder nach der Datenkommunikation mit dem Rechner ein Datenaustausch zwischen dem Festplattenspeicher und den Datenträgerkassetten erfolgt.

Die eingangs genannte Aufgabe wird außerdem bei einer hinsichtlich der Installation besonders günstigen Datenspeichereinrichtung, die sich für Aufstellung und Betrieb einer derart aufgebauten Datenspeichereinrichtung als besonders günstig erwiesen hat, dadurch gelöst, daß die Datenspeichereinrichtung ein Gehäuse aufweist, in welchem der Archivspeicher, die Datenspeichersteuerung und der mindestens eine Festplattenspeicher angeordnet und fest installiert sind.

Diese Lösung hat den großen Vorteil, daß damit ein Vertrieb und eine Installation einer derartigen Datenspeichereinrichtung im Zusammenhang mit einem Rechner derart erfolgen kann, wie wenn es sich um eine einzige, mit dem Rechner zu verbindende Speichereinheit handeln würde. Damit ist hinsichtlich Vertriebs- und Installationsaufwand eine besonders günstige Lösung vorhanden.

Außerdem hat diese Lösung noch den großen Vorteil, daß auch die Betriebssicherheit dadurch deutlich erhöht wird, daß alle drei Einheiten, nämlich Archivspeicher, Festplattenspeicher und Datenspeichersteuerung fest installiert und aufeinander abgestimmt sind.

Da die Einheiten Archivspeicher, Festplattenspeicher und Datenspeichersteuerung dann, wenn sie als einheitliches Gerät aufstellbar und vertreibbar sein sollen, ein möglichst kompaktes Gerät ergeben sollten, ist bei einer weiteren eingangs genannten Datenspeichereinrichtung zur Lösung der vorstehend genannten Aufgabe vorzugsweise vorgesehen, daß ein Gestell der Datenspeichereinrichtung zwei Gestellsegmente aufweist, wobei in einem Gestellsegment der Archivspeicher und in dem anderen Gestellsegment die Datenspeichersteuerung und der mindestens eine Festplattenspeicher angeordnet sind. Diese Aufteilung des Gestells in zwei Gestellsegmente hat den großen Vorteil, daß damit eine hinsichtlich des Raumbedarfs und der Zugänglichkeit optimale Anordnung der einzelnen Einheiten gewählt werden kann.

Besonders günstig ist es dabei, wenn die zwei Gestellsegmente als flache Quader ausgebildet sind und sich mit ihren Flachseiten parallel zu einer Vertikalen erstrecken.

Dabei ist es besonders zweckmäßig, wenn die zwei Gestellsegmente sich im wesentlichen über die gesamte Höhe des Gestells in vertikaler Richtung erstrecken.

Vorzugsweise ist dabei vorgesehen, daß die Gestellsegmente sich mit ihren Flachseiten parallel zu einer Gestellfront erstrecken und unmittelbar hinter der Gestellfront ein vorderes Gestellsegment und ein hinter diesem angeordnetes hinteres Gestellsegment bilden.

Hinsichtlich der Aufteilung der einzelnen Einheiten auf die beiden Gestellsegmente wurden bislang keine näheren Angaben gemacht. So ist es besonders günstig hinsichtlich der möglicherweise erforderlichen Wartungszugriffe, wenn die Aufbewahrungseinheit, die mindestens eine Schreib-/Leseeinrichtung und die Übergabeeinrichtung in dem vorderen Gestellsegment angeordnet sind.

Ferner hat es sich aufgrund der weniger häufigen Zugänglichkeit als sinnvoll erwiesen, wenn die Datenspeichersteuerung und der mindestens eine Festplattenspeicher in dem hinteren Gestellsegment angeordnet sind.

Hinsichtlich der Art der Anordnung der Datenspeichersteuerung und der Festplattenspeicher in dem hinteren Gestellsegment wurden bislang keine näheren Angaben gemacht. So sieht ein vorteilhaftes Ausführungsbeispiel vor, daß das hintere Gestellsegment Aufnahmen für die Datenspeichersteuerung und den mindestens einen Festplattenspeicher aufweist, deren Frontseiten auf einer Seite des Gestells liegen. Damit sind die Aufnahmen von einer Seite des Gestells her leicht zugänglich, so daß beispielsweise zu Wartungszwecken die Datenspeichersteuerung und/oder der mindestens eine Festplattenspeicher einerseits im Bereich ihrer Frontseiten leicht zugänglich sind und auch leicht demontierbar sind.

Besonders günstig ist es dabei, wenn die Aufnahmen für die Datenspeichersteuerung und den mindestens einen Festplattenspeicher in vertikaler Richtung übereinanderliegend angeordnet sind, so daß das diese aufnehmende Gestellsegment keine große Bautiefe benötigt.

Besonders günstig ist es hierbei, wenn die Datenspeichersteuerung so angeordnet ist, daß deren Flachseite mit größter Ausdehnung parallel zu der Flachseite der Gestellsegmente verläuft.

Um die Datenspeichersteuerung mit den anderen Einheiten günstig verschalten zu können, ist vorzugsweise vorgesehen, daß das hintere Gestellsegment einen Verschaltungsraum bildet, an welchen die Aufnahmen für die Datenspeichersteuerung und den mindestens einen Festplattenspeicher mit einer Rückseite angrenzen. Damit sind die einzelnen Einheiten für die Verschaltung miteinander in einfacher Weise zugänglich und die gesamten Kabel können günstig in einem einzigen Verschaltungsraum in dem hinteren Gestellsegment angeordnet werden.

Der Verschaltungsraum ist dabei beispielsweise so angeordnet, daß er der Frontseite der Aufnahmen gegenüberliegend im hinteren Gestellsegment liegt, vorzugsweise nahe einer der Frontseite der Aufnahmen gegenüberliegenden Seite des Gestells.

Hinsichtlich der Anordnung der Schreib-/Leseeinheiten in dem vorderen Gestellsegment wurden bislang keine näheren Angaben gemacht. So sieht ein vorteilhaftes Ausführungsbeispiel vor, daß das vordere Gestellsegment mindestens eine Aufnahme für die mindestens eine Schreib-/Leseeinheit aufweist und daß die Aufnahme mit einer Rückseite an den Verschaltungsraum im hinteren Gestellsegment angrenzt. Diese Lösung hat den großen Vorteil, daß damit sowohl die Schreib-/Leseeinheiten als auch die Datenspeichersteuerung und die Festplattenspeicher in einfacher Weise durch in dem Verschaltungsraum geführte Kabel miteinander verschaltet werden können, ohne daß große Wege zu überwinden sind, so daß damit insbesondere auch die Wartungsfreundlichkeit des erfindungsgemäßen Datenspeichers erhöht werden kann, da die gesamten Verschaltungen zwischen den einzelnen Einheiten in dem einen Verschaltungsraum zusammengefaßt sind.

Besonders günstig ist es dabei, wenn das vordere Gestellsegment mehrere Aufnahmen für mehrere Schreib-/Leseeinheiten aufweist, die alle mit ihrer Rückseite an den Verschaltungsraum angrenzen.

Um auch bei der Anordnung der Schreib-/Leseeinheiten eine möglichst günstige Anordnung zu erhalten, die insbesondere ein Optimum an Raumersparnis zuläßt, ist vorzugsweise vorgesehen, daß die Aufnahmen für die Schreib-/Leseeinheiten übereinanderliegend angeordnet sind.

Hinsichtlich der Anordnung der Schreib-/Leseeinheiten in den Aufnahmen wurden bislang keine näheren Angaben gemacht. So wäre es beispielsweise denkbar, das vordere Gestellsegment derart zu dimensionieren, daß dieses die gesamten Schreib-/Leseeinheiten aufnehmen kann. Besonders günstig ist es jedoch, ebenfalls wieder aus Gründen der Raumersparnis, wenn die in den Aufnahmen angeordneten Schreib-/Leseeinheiten mit ihren Rückseiten in den Verschaltungsraum hineinragen, so daß der Verschaltungsraum zusätzlich noch zur Aufnahme der quer zur Flachseite des vorderen Gestellsegments eine relativ große Ausdehnung aufweisenden Schreib-/Leseeinheiten herangezogen werden kann.

Im Zusammenhang mit den bisherigen Ausführungsbeispielen wurde der Aufbau der Aufbewahrungseinheit selbst nicht näher spezifiziert. So sieht eine vorteilhafte Lösung vor, daß die Aufbewahrungseinheit einzelne Speicherfächer zur Aufnahme der Datenträgerkassetten aufweist.

Vorzugsweise sind dabei die Speicherfächer mit Einlegöffnungen versehen, die alle in einer Speicherebene angeordnet sind.

Mit einem derartigen Aufbau läßt sich die Aufbewahrungseinheit besonders günstig durch die Übergabeeinrichtung bedienen.

Ferner ist vorzugsweise vorgesehen, daß die Schreib-/Leseeinrichtungen Einlegeschächte aufweisen, deren Einlegeöffnungen alle in einer Einlegeebene liegen. Eine derartige Anordnung der Schreib-/Leseeinrichtungen hat ebenfalls den Vorteil einer leichten Zugänglichkeit durch die Übergabeeinrichtung.

Ferner ist die Übergabeeinrichtung vorzugsweise so ausgebildet, daß mit dieser ein Greifer in einer Handhabungsebene bewegbar ist, wobei die Handhabungsebene vorzugsweise parallel zu der Speicherebene und zu der Einlegeebene verläuft. Besonders günstig ist es, wenn die Speicherebene und die Zugangsebene miteinander zusammenfallen und die Handhabungsebene vor diesen beiden zusammenfallenden Ebenen liegt.

Besonders günstig ist es dabei, wenn die Übergabeeinrichtung einen Greifer für die Datenträgerkassetten aufweist, mit welchem in einer quer zur Handhabungsebene verlaufenden Zugriffsrichtung ein Zugriff auf die Datenträgerkassetten möglich ist.

Eine besonders günstige Anordnung der einzelnen Einheiten sieht vor, daß die Speicherebene, die Einlegeebene und die Handhabungsebene parallel zur Flachseite des vorderen Gestellsegments verlaufen, so daß damit eine besonders raumsparende Möglichkeit der Anordnung gegeben ist.

Hinsichtlich der Bedienungsfreundlichkeit der erfindungsgemäßen Datenspeichereinrichtung wurden im Zusammenhang mit der bisherigen Beschreibung der einzelnen Ausführungsbeispiele keine näheren Angaben gemacht. So sieht eine vorteilhafte Lösung vor, daß das Gehäuse eine Frontwand aufweist, in welcher ein mit der Datenspeichersteuerung zusammenwirkender Bildschirm angeordnet ist. Diese Lösung hat den Vorteil, daß ein Bediener der erfindungsgemäßen Datenspeichereinrichtung in einfacher Weise mit der Datenspeichersteuerung kommunizieren kann, insbesondere wenn diese in dem hinteren Gestellsegment angeordnet und somit ungünstig zugänglich ist.

Ferner läßt sich die Kommunikation mit der Datenspeichersteuerung auch dann noch zusätzlich erleichtern, wenn im Bereich der Frontwand ein Tastenfeld zur Kommunikation mit der Datenspeichersteuerung angeordnet ist. Ein derartiges Tastenfeld ist dabei vorzugsweise unterhalb des Bildschirms angeordnet.

Da ein derartiges Tastenfeld zwar zur Kommunikation mit der Datenspeichersteuerung wünschenswert ist, jedoch im Normalbetrieb der erfindungsgemäßen Datenspeichereinrichtung nicht ständig erforderlich ist, ist vorzugsweise vorgesehen, daß das Tastenfeld in eine Tastenfeldaufnahme in der Frontwand des Gehäuses einklappbar und aus dieser ausklappbar ist, so daß das Tastenfeld im Normaleinsatz der erfindungsgemäßen Datenspeichereinrichtung keinen zusätzlichen Raum benötigt und nur dann in eine ergonomisch günstige, jedoch raumbenötigende Stellung herausgeklappt wird, wenn eine Kommunikation mit der Datenspeichersteuerung erforderlich ist, was beispielsweise bei Wartungszwecken oder bei Austausch von Datenträgerkassetten der Fall sein kann.

Weitere Merkmale und Vorteile der Erfindung sind Gegenstand der nachfolgenden Beschreibung sowie der zeichnerischen Darstellung eines Ausführungsbeispiels. In der Zeichnung zeigen:
- Fig. 1: eine schematische Darstellung eines Ausführungsbeispiels der erfindungsgemäßen Datenspeichereinrichtung in Form von einzelnen Einheiten der Datenspeichereinrichtung zugeordneten Blöcken sowie die Kommunikation der erfindungsgemäßen Datenspeichereinrichtung mit einem Rechner;
- Fig. 2: eine spezifische Darstellung eines Gestells der erfindungsgemäßen Datenspeichereinrichtung mit in diesem eingebauten Einheiten;
- Fig. 3: eine Draufsicht in Richtung des Pfeils A in Fig. 2;
- Fig. 4: einen Schnitt längs Linie 4-4 in Fig. 3;

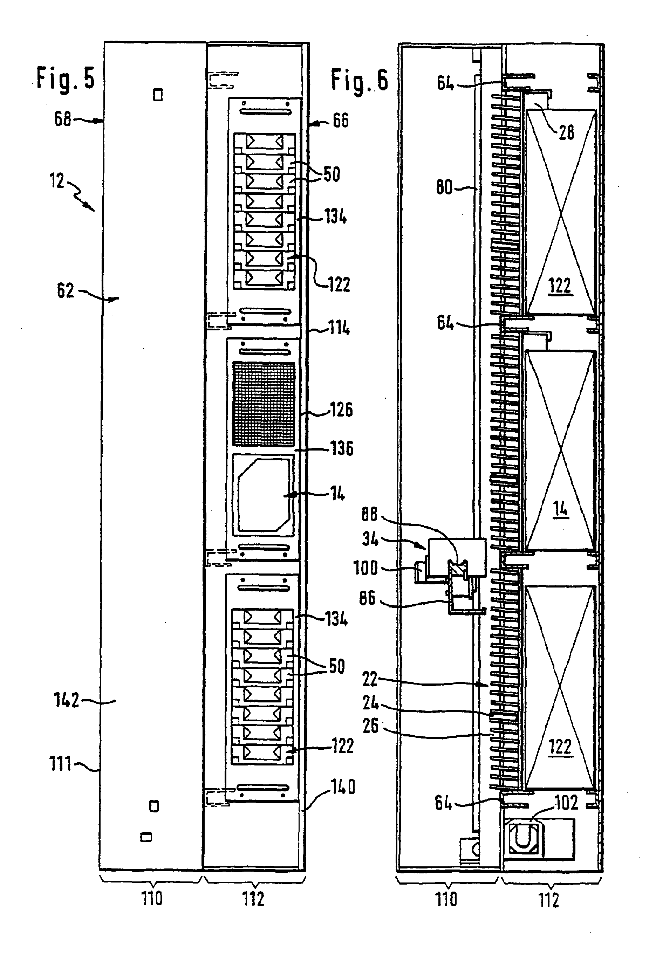

- Fig. 5: eine Seitenansicht in Richtung des Pfeils B in Fig. 2;
- Fig. 6: einen Schnitt längs Linie 6-6 in Fig. 3;
- Fig. 7: eine perspektivische Darstellung einer erfindungsgemäßen Datenspeichereinrichtung mit einem das Gestell und die Einheiten umgebenden Gehäuse;
- Fig. 8: eine Darstellung der Datenspeichereinrichtung gemäß Fig. 7 mit aufgeklappten Rundtüren.

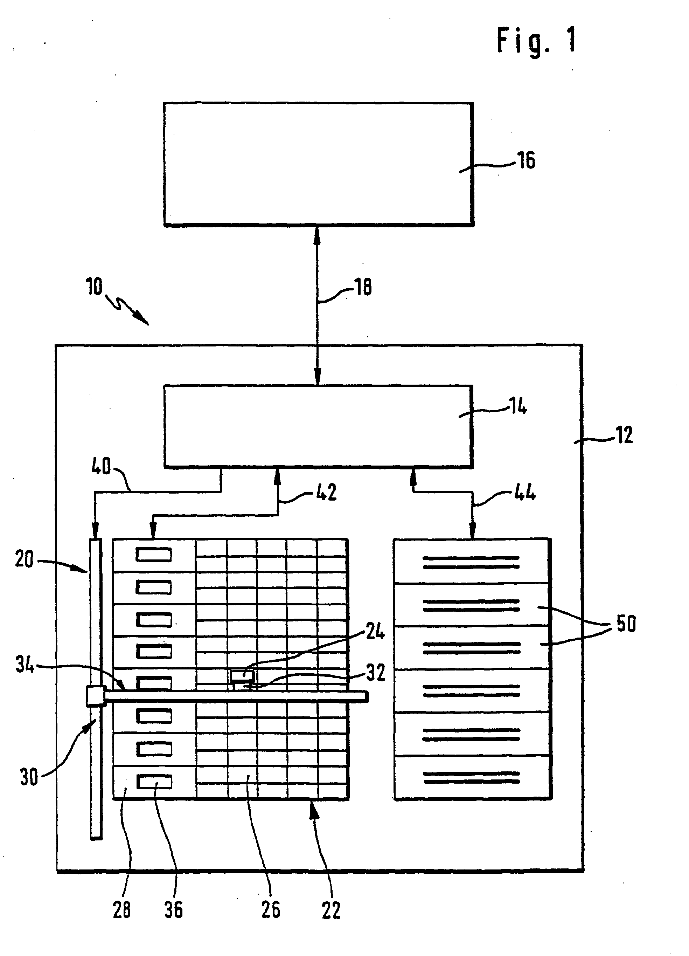

Ein Ausführungsbeispiel einer erfindungsgemäßen Datenspeichereinrichtung, schematisch dargestellt in Fig. 1 und als Ganzes mit 10 bezeichnet, umfaßt ein schematisch mit 12 bezeichnetes Gestell, in welchem eine Datenspeichersteuerung 14 angeordnet ist, die mit einem externen Rechner 16 oder einem Netzwerk und somit mit mehreren Rechnern kommuniziert und über einen Pfad 18 Daten austauscht. Die Datenspeichersteuerung 14 betreibt dabei einen als Ganzes mit 20 bezeichneten Archivspeicher, welcher eine Aufbewahrungseinheit 22 für Datenträgerkassetten 24 aufweist, wobei die Aufbewahrungseinheit 22 eine Vielzahl von Speicherfächern 26 für Datenträgerkassetten 24 umfaßt. Außerdem umfaßt der Archivspeicher 20 noch mehrere Schreib-/Leseeinheiten 28, in welche die Datenträgerkassetten 24 einsetzbar sind, um auf diese Daten zu schreiben oder von diesen Daten zu lesen.

Zum Transport der Datenträgerkassetten 24 zwischen den Schreib-/Leseeinheiten 28 und den Speicherfächern 26 der Aufbewahrungseinheit 22 ist eine als Ganzes mit 30 bezeichnete Übergabeeinrichtung vorgesehen, welche beispielsweise einen Greifer 32 aufweist, mit welchem Datenträgerkassetten 24 in den Speicherfächern 26 der Aufbewahrungseinheit gefaßt und in die Schreib-/Leseeinheiten 28 transportiert oder in diesen Schreib-/Leseeinheiten 28 gefaßt in die Speicherfächer 26 übergeben werden können.

Der Greifer 32 ist vorzugsweise an einer Handhabungseinheit 34 der Übergabeeinrichtung 30 montiert und ist durch die Handhabungseinheit 34 zwischen den Speicherfächern 26 und verschiedenen Einlegeschächten 36 der Schreib-/Leseeinheiten 28 hin- und herbewegbar.

Um nun die einzelnen Datenträgerkassetten 24 in die jeweiligen Schreib-/Leseeinheiten 28 einzulegen, zu beschreiben und zu lesen und danach wieder in den Speicherfächern 26 der Aufbewahrungseinheit 22 abzulegen, steuert die Datenspeichersteuerung 14 über einen Kommunikationspfad 40 die Übergabeeinrichtung 30 an, das heißt, insbesondere deren Handhabungseinheit 34 und deren Greifer 32, und über einen Kommunikationspfad 42 die Schreib-/Leseeinheiten 28, wobei über den Kommunikationspfad 42 auch auf den Datenträgerkassetten 24 zu speichernde Daten oder von den Datenträgerkassetten 24 gelesene Daten übergeben werden.

Die Datenspeichersteuerung 14 ist weiterhin über einen Kommunikationspfad 44 mit mehreren Festplattenspeichern 50 verbunden, die ebenfalls in dem Gestell 12 angeordnet sind und dazu dienen, von der Datenspeichersteuerung 14 übergebene Daten zwischenzuspeichern.

Die mit dem Rechner 16 über die Datenleitung 18 kommunizierende Datenspeichersteuerung 14 tauscht mit dem Rechner 16 über den Pfad 18 Daten mit einer Datenaustauschrate aus, wie wenn die gesamte Datenspeichereinrichtung 10 ein Festplattenspeicher wäre. Hierzu legt die Datenspeichersteuerung 14 beispielsweise über den Pfad 18 der erfindungsgemäßen Datenspeichereinrichtung 10 übergebene Daten - insbesondere, wenn es sich um Datensätze handelt, die nicht als Ganzes einfach aufeinanderfolgend auf ein Band zu schreiben sind - zunächst in den Festplattenspeichern 50 ab, um dann, wenn vom Rechner 16 keine Datenübergabe oder keine Datenanforderung mehr erfolgt, diese Daten auf Datenträgerkassetten 24 in den verschiedenen Schreib-/Leseeinheiten 28 zu überschreiben, wobei die beschriebenen Datenträgerkassetten 24 dann von der Übergabeeinrichtung 30 in den Speicherfächern 26 der Aufbewahrungseinheit 22 abgelegt werden. Sollte eine schnelle Datenausgabe über die Datenleitung 18 an den Rechner 16 notwendig werden, beispielsweise dann, wenn der Rechner 16 eine bestimmte Art von auf den Datenträgerkassetten 24 gespeicherten Daten - insbesondere nicht auf einem einzigen Band zusammenhängend gespeicherte Datensätze - anfordert, so steuert die Datenspeichersteuerung 14 zunächst die Übergabeeinrichtung 30 dergestalt an, daß sie die entsprechenden Datenträgerkassetten 24 in den jeweiligen Speicherfächern 26 der Aufbewahrungseinheit 22 auffindet, in die Einlegeschächte 36 der Schreib-/Leseeinheiten 28 einlegt, so daß dann in den Schreib-/Leseeinheiten die eingelegten Datenträgerkassetten 24 gelesen und die Daten in die Festplattenspeicher 50 überschrieben werden können, in denen diese Daten dann auf Abruf durch den Rechner 16 mit der für Festplattenspeicher üblichen Datenaustauschrate bereitstehen.

Sollen jedoch beispielsweise Datensätze auf einem Band hintereinander zusammenhängend gespeichert werden oder auf diesem Band gelesen werden, so kann die Datenspeichersteuerung 14 auch direkt auf das Band in der jeweiligen Schreib-/Leseeinheit 28 zugreifen, da in diesem Fall eine Datenaustauschrate möglich ist, die mindestens der mit einem Festplattenspeicher entspricht.

Somit besteht insgesamt die Möglichkeit, die Kommunikation zwischen dem Rechner und der erfindungsgemäßen Datenspeichereinrichtung als Ganzes dergestalt durchzuführen, wie wenn die erfindungsgemäße Datenspeichereinrichtung 10 lediglich ein Festplattenspeicher 50 wäre, obwohl letztlich für eine Langzeitspeicherung die Daten in Datenträgerkassetten 24 kostengünstig und sicher abgespeichert werden.

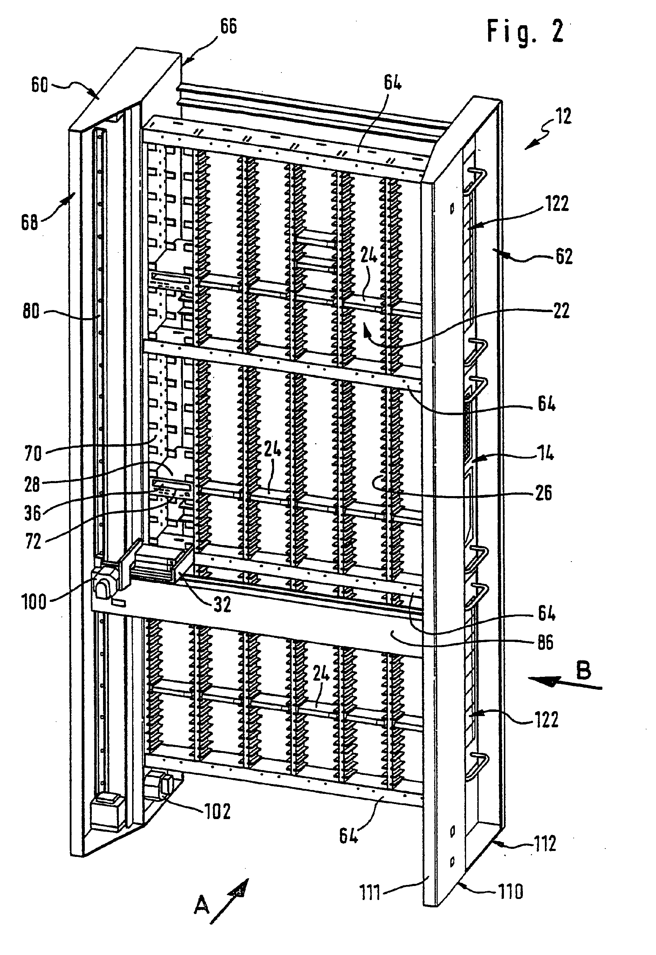

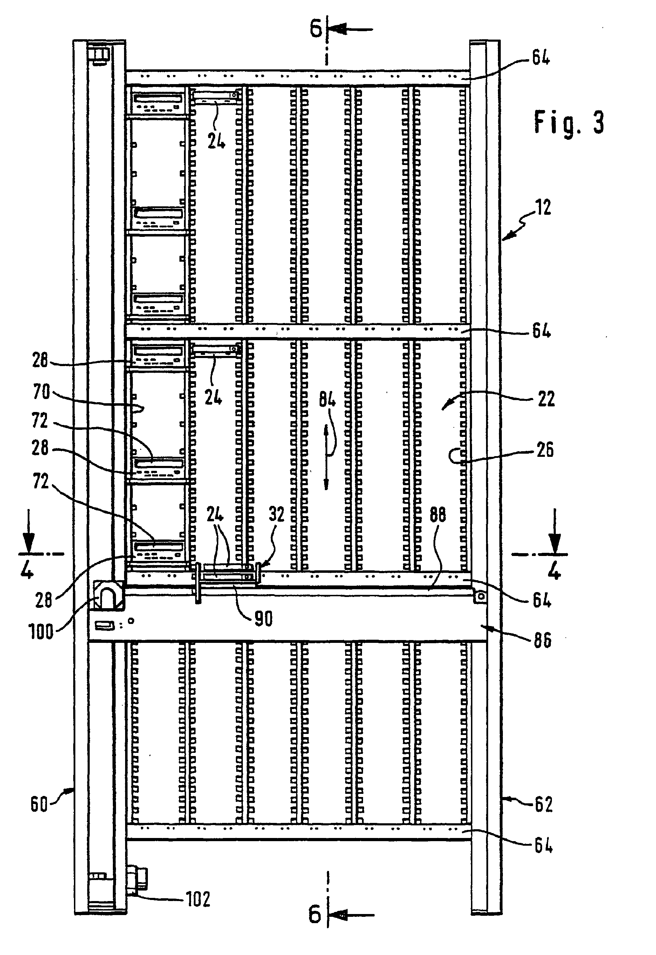

Wie in Fig. 2 und 3 dargestellt, ist das Gestell so aufgebaut, daß dieses zwei seitliche Ständer bildende Seitenwangen 60 und 62 aufweist, zwischen denen sich Querträger 64 erstrecken, wobei die Querträger 64 ungefähr in einem mittigen Bereich zwischen einer Rückseite 66 des Gestells und einer Vorderseite 68 des Gestells liegen.

Zwischen den Trägern 64 ist die Aufbewahrungseinheit 22 mit ihren Kassettenfächern 26 angeordnet, wobei in den Kassettenfächern 26 die Datenträgerkassetten 24 ablegbar sind. Die gesamte Aufbewahrungseinheit 22 erstreckt sich dabei beispielsweise ausgehend von der Seitenwange 62 in Richtung der Seitenwange 60, allerdings nicht bis ganz zu dieser. Nahe der Seitenwange 60 sind zwischen dieser und der Aufbewahrungseinheit 22 Aufnahmen 70 für die Schreib-/Leseeinheiten 28 vorgesehen, in deren Einlegeschächte 36 dann die Datenträgerkassetten 24 aus der Aufbewahrungseinheit 22 einlegbar sind.

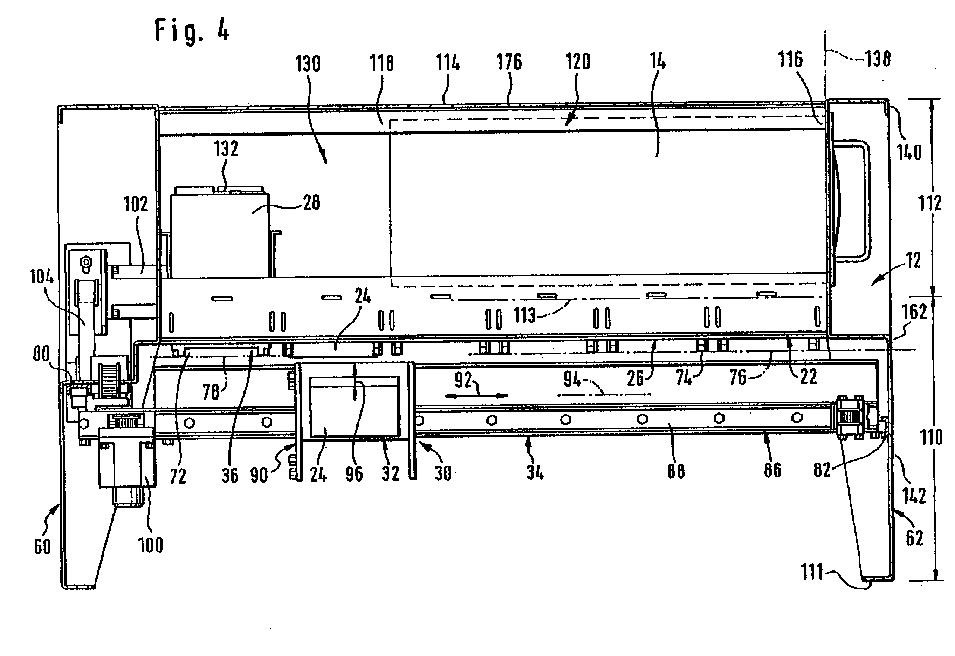

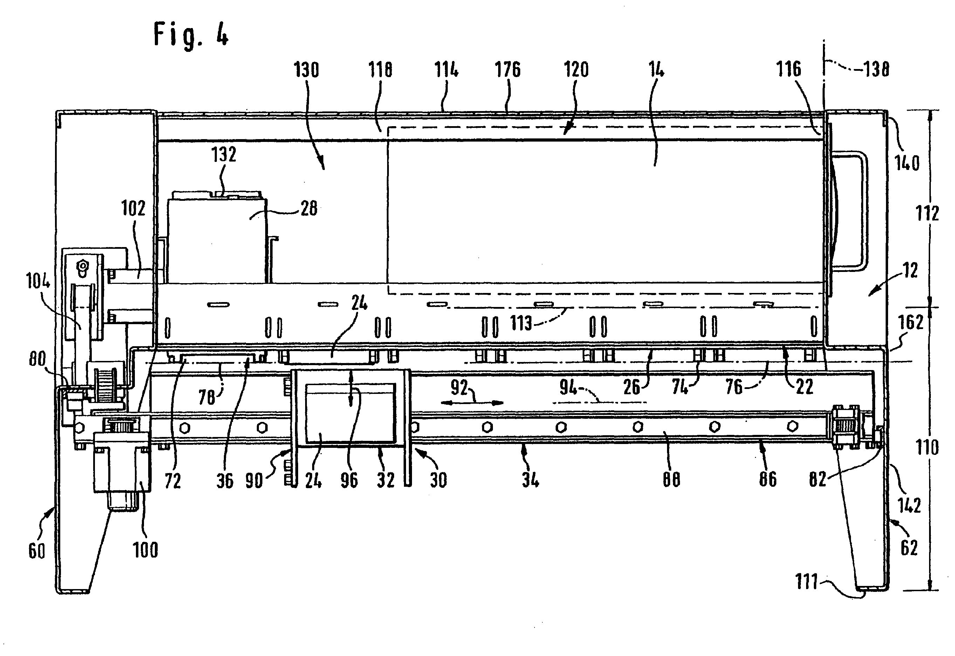

Vorzugsweise liegen, wie in Fig. 4 dargestellt, die Speicherfächer 26 der Aufbewahrungseinheit 22 so, daß deren Vorderseiten 74 in einer gemeinsamen Speicherebene 76 liegen, welche sich beispielsweise parallel zu den Querträgern 64 erstreckt.

Ferner sind auch die Schreib-/Leseeinheiten 28 derart in die Aufnahmen 70 eingesetzt, daß Einlegeöffnungen 72 von deren Einlegeschächte 36 in einer Einlegeebene 78 liegen, die parallel zur Speicherebene 76 verläuft, vorzugsweise mit dieser fluchtet.

Die Handhabungseinheit 34 der Übergabeeinrichtung 30 umfaßt zwei in vertikaler Richtung verlaufende Längsführungen 80 und 82, welche an den Seitenwangen 60 und 62 gehalten sind. An diesen beiden Längsführungen 80 und 82 ist in einer vertikalen Richtung 84 ein Greiferträger 86 der Handhabungseinheit 34 auf- und abbewegbar, und an dem Greiferträger 86 ist über eine Längsführung 88 ein Schlitten 90 geführt, welcher den Greifer 32 trägt und durch welchen der Greifer 32 in einer Querrichtung 92 zur vertikalen Richtung 84 verschiebbar ist.

Somit ist der Greifer 32 sowohl in der vertikalen Richtung 84 als auch in der Querrichtung 92 und somit in einer Handhabungsebene 94 bewegbar, wobei die Handhabungsebene 94 parallel zur Speicherebene 76 und zur Einlegeebene 78 verläuft.

Außerdem ist der Greifer 32 mit einem zeichnerisch nicht dargestellten Zugriffselement versehen, welches in einer Zugriffsrichtung 96 in Richtung der Speicherfächer 26 oder der Einlegeschächte 36 bewegbar ist, um auf jeweils eine in diesen stehende Datenträgerkassette 24 zugreifen zu können und diese Datenträgerkassette 24 dann transportieren und übergeben zu können.

Zum Bewegen des Schlittens 90 entlang des Greiferträgers 86 ist dieser mit einem Antriebsmotor 100 versehen, welcher mit dem Greiferträger 86 in der vertikalen Richtung 84 bewegbar ist. Der Motor 100 treibt beispielsweise den Schlitten 90 über einen zeichnerisch nicht dargestellten Zahnriemen in der Querrichtung 92 an.

Desgleichen ist an dem Gestell 10, vorzugsweise in einem Fußbereich der Seitenwange 60, ein Motor 102 angeordnet, mit welchem ein Zahnriemen 104 zum Heben und Senken, das heißt, Bewegen des gesamten Greiferträgers 86 in der vertikalen Richtung 84 bewegbar ist.

Zur Aufnahme des gesamten Archivspeichers 20 umfaßt das Gestell 12 ein vorderes Gestellsegment 110, in welchem die Aufbewahrungseinheit 22, die Aufnahmen 70 für die Schreib-/Leseeinheiten 28 sowie die gesamte Handhabungseinrichtung 34 angeordnet und geführt sind.

Dabei erstreckt sich das vordere Gestellsegment 110 in der vertikalen Richtung 84 im wesentlichen über die gesamte Höhe des Gestells 12 und über die gesamte Breite desselben in der Querrichtung 92 und schließt nach vorne mit einer Frontseite 111 ab.

Hinter dem vorderen Gestellsegment 110 liegt ein hinteres Gestellsegment 112, welches zwischen dem vorderen Gestellsegment 110 und einer Rückseite 114 des Gestells 12 liegt und mit dem vorderen Gestellsegment eine gemeinsame Flachseite 113 aufweist, welche gleichzeitig eine Trennebene zwischen den beiden bildet.

In diesem hinteren Gestellsegment 112 sind mit ihren Frontseiten 116 im Bereich der Seitenwange 62 liegende und sich bis zu einer Rückseite 118 in das hintere Gestellsegment 112 in Richtung der Seitenwange 60 hineinerstreckende Aufnahmen 120 vorgesehen, die zur Aufnahme der Datenspeichersteuerung 14 und von Festplattenspeichern 50 dienen, wobei die Festplattenspeicher 50 in Stapel 122 übereinander angeordnet sind.

Vorzugsweise ist zwischen zwei Stapeln 122 von Festplattenspeichern 50 die Datenspeichersteuerung 14 angeordnet, wobei diese so eingebaut ist, daß sich die längste Gehäuseseite 126 ungefähr parallel zur Vertikalen 84 und parallel zur Rückseite 114 erstreckt.

Sowohl die Aufnahmen 120 für die Stapel 122 von Festplattenspeichern 50 als auch die Datenspeichersteuerung 14 grenzen mit ihrer Rückseite 118 an einen Verschaltungsraum 130, welcher zwischen der Rückseite 118 der Aufnahmen 120 und der Seitenwange 60 liegt.

Der Verschaltungsraum 130 ist ferner noch so angeordnet, daß sich auch die in den Aufnahmen 70 eingesetzten Schreib-/Leseeinheiten 28 mit ihrer Geräterückseite 132 in den Verschaltungsraum 130 hinein erstrecken können, so daß sowohl die Schreib-/Leseeinheiten 28 als auch die Datenspeichersteuerung 14 und die Stapel 122 von Festplattenspeichern 50 von ihrer Rückseite her zum Anschluß von Kabeln zugänglich sind, die alle in dem Verschaltungsraum 130 angeordnet sind und in diesem verlaufen. Vorzugsweise ist die Zahl der Festplattenspeicher 50 in den Stapeln 122 maximal so gewählt, daß sich diese gemeinsam mit der in die Aufnahme 120 eingesetzte Datenspeichersteuerung 14 im wesentlichen über die gesamte Höhe des Gestells 12 erstrecken.

Somit sind die gesamten Festplattenspeicher 50 und die Datenspeichersteuerung 14 so angeordnet, daß deren Frontseiten 134 und 136 in einer Frontseitenebene 138 liegen, die gegenüber seitlichen Außenwandflächen 140 und 142 der Seitenwange 62 zurückgesetzt liegt, so daß die Frontseiten 134 und 136 stoßgesichert sind.

Eine derartige Anordnung der Festplattenspeicher 50 und der Datenspeichersteuerung 14 in dem hinteren Gestellsegment 112 hinter dem vorderen Gestellsegment 110 läßt eine besonders platzsparende Einbauweise der Festplattenspeicher 50 und der Datenspeichersteuerung 14 zu.

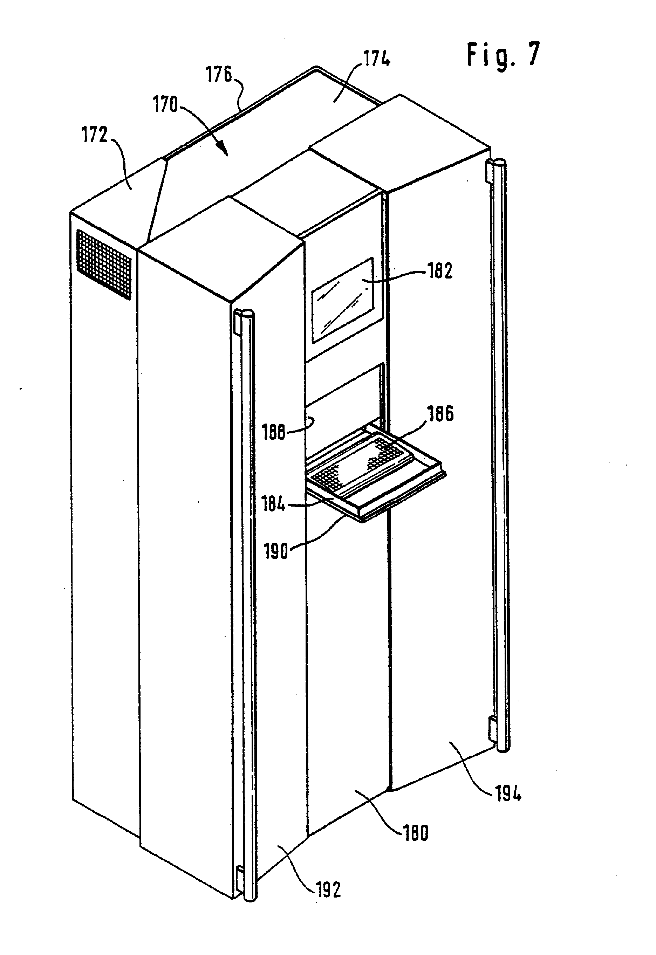

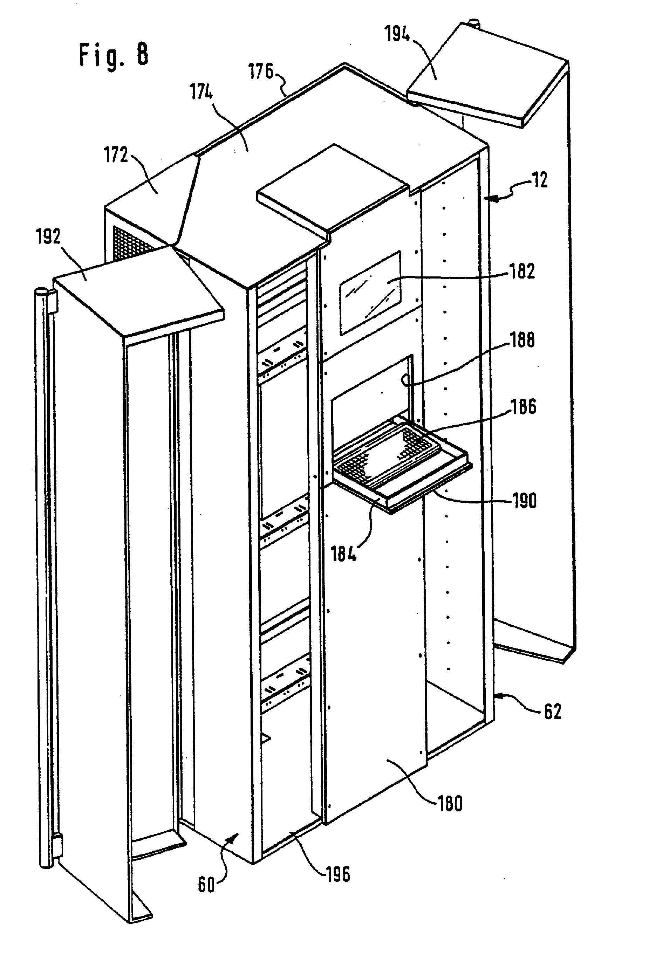

Das Gestell 12 ist, wie in Fig. 7 und 8 dargestellt, von einem äußeren Gehäuse 170 umgeben, welches zur Erleichterung des Zugangs zu dem Verschaltungsraum 130 mit einer abnehmbaren hinteren Teilabdeckung 172 für das hintere Gestellsegment 112 versehen ist.

Ferner weist das Gehäuse 170 noch einen Deckel 174 für das Gestell 12 sowie eine Rückwand 176 auf, die das Gestell 12, das heißt das hintere Gestellsegment 112, in Ergänzung zur Teilabdeckung 172 rückseitig übergreift.

Ferner ist das Gehäuse 170 noch mit einer vorderen Mittelwand 180 versehen, welche zwischen den Seitenwangen 60 und 62 liegt und in ihrem oberen Bereich einen Bildschirm 182 trägt, welcher als Anzeige für die Datenspeichersteuerung 14 dient.

Unter dem Bildschirm 182 ist in der vorderen Mittelwand 180 eine Klappauflage 184 vorgesehen, auf welcher ein Tastenfeld 186 zur Bedienung der Datenspeichersteuerung 14 angeordnet ist.

Die Klappauflage 184 ist dabei in eine Ausnehmung oder Vertiefung 188 in der vorderen Mittelwand 180 einklappbar und schließt mit einem Boden 190 im in die Ausnehmung 188 eingeklappten Zustand mit der Mittelwand 180 ab.

Im ausgeklappten Zustand ist, wie in Fig. 7 und 8 dargestellt, das Tastenfeld 186 in ergonomisch günstiger Höhe zugänglich.

Ferner sind beiderseits der vorderen Mittelwand 180 des Gehäuses 170 schwenkbare Seitenteile 192 und 194 des Gehäuses 170 angeordnet, welche im abgeschwenkten, in Fig. 8 dargestellten Zustand einen Zugang zu den Einlegeschächten 36 der Schreib-/Leseeinheiten 28 sowie einen teilweisen Zugang zu Speicherfächern 26 der Aufbewahrungseinheit 22 zulassen und im geschlossenen Zustand beiderseits der vorderen Mittelwand 180 eine Frontöffnung 196 des Gestells 12 verschließen.

## Patentansprüche

1. Datenspeichereinrichtung, umfassend einen Archivspeicher mit einer Aufbewahrungseinheit für eine Vielzahl von Datenträgerkassetten, mit mindestens einer Schreib-/Leseeinrichtung für die Datenträgerkassetten und mit einer Übergabeeinrichtung, mit welcher eine Übergabe einzelner Datenträgerkassetten aus der Aufbewahrungseinheit in die Schreib-/Leseeinrichtung und umgekehrt durchführbar ist, und ferner umfassend eine Datenspeichersteuerung, welche die Schreib-/Leseeinrichtung und die Übergabeeinrichtung zur Speicherung von Daten steuert und welche mit einem Rechner in Datenaustauschverbindung steht, um von diesem übergebene Daten zu speichern oder im Datenspeicher gespeicherte Daten dem Rechner zur Verfügung zu stellen,
**dadurch gekennzeichnet,**
**daß** die Datenspeichereinrichtung (10) zusätzlich zum Archivspeicher (20) mindestens einen Festplattenspeicher (50) zur Speicherung von mit dem Rechner (16) auszutauschenden Daten aufweist, daß die Datenspeichersteuerung (14) den Festplattenspeicher (50) und den Archivspeicher (20) parallel betreibt, daß die Datenspeichersteuerung (14) mit dem Archivspeicher (20) und dem mindestens einen Festplattenspeicher (50) zusammen ein als eine Speichereinheit installierbares Gerät bilden, in welchem eine Langzeitspeicherung der Daten mittels der Datenträgerkassetten (24) erfolgt und welches mit dem Rechner (16) wie eine einzige Speichereinheit kommuniziert.

2. Datenspeichereinrichtung nach Anspruch 1, **dadurch gekennzeichnet, daß** die Datenspeichersteuerung (14) den Archivspeicher (20) und den Festplattenspeicher (50) derart betreibt, daß diese mit dem Rechner (16) einen Datenaustausch mit Datenaustauschraten in der Größenordnung von einem Festplattenspeicher entsprechenden Datenaustauschraten zulassen.

3. Datenspeichereinrichtung nach einem der voranstehenden Ansprüche, **dadurch gekennzeichnet, daß** bei nicht bereits in der Schreib-/Leseeinrichtung (28) liegender Datenträgerkassette (24) mit dem Rechner (16) ausgetauschte Daten auf dem Festplattenspeicher (50) zwischengespeichert werden und entweder vor der Datenkommunikation mit dem Rechner (16) oder nach der Datenkommunikation mit dem Rechner (16) ein Datenaustausch zwischen dem Festplattenspeicher (50) und den Datenträgerkassetten (24) erfolgt.

4. Datenspeichereinrichtung nach dem Oberbegriff des Anspruchs 1 oder nach einem der voranstehenden Ansprüche, **dadurch gekennzeichnet, daß** die Datenspeichereinrichtung (10) ein Gehäuse (170) aufweist, in welchem der Archivspeicher (20), die Datenspeichersteuerung (14) und der mindestens eine Festplattenspeicher angeordnet und fest installiert sind.

5. Datenspeichereinrichtung nach dem Oberbegriff des Anspruchs 1 oder einem der voranstehenden Ansprüche, **dadurch gekennzeichnet, daß** diese ein Gestell (12) mit zwei Gestellsegmenten (110, 112) aufweist, wobei in einem Gestellsegment (110) der Archivspeicher (20) und in dem anderen Gestellsegment (112) die Datenspeichersteuerung (14) und der mindestens eine Festplattenspeicher (50) angeordnet sind.

6. Datenspeichereinrichtung nach Anspruch 5, **dadurch gekennzeichnet, daß** die zwei Gestellsegmente (110, 112) als flache Quader ausgebildet sind und sich mit ihren Flachseiten (113) parallel zur einer Vertikalen (84) erstrecken.

7. Datenspeichereinrichtung nach Anspruch 5 oder 6, **dadurch gekennzeichnet, daß** sich die zwei Gestellsegmente (110, 112) im wesentlichen über die gesamte Höhe des Gestells (12) in vertikaler Richtung (84) erstrecken.

8. Datenspeichereinrichtung nach Anspruch 6 oder 7, **dadurch gekennzeichnet, daß** die Gestellsegmente (110, 112) sich mit ihren Flachseiten (113) parallel zu einer Gestellfront (111) erstrecken und unmittelbar hinter der Gestellfront (111) ein vorderes Gestellsegment (110) und ein hinter diesem liegendes hinteres Gestellsegment (112) bilden.

9. Datenspeichereinrichtung nach Anspruch 8, **dadurch gekennzeichnet, daß** die Aufbewahrungseinheit, die mindestens eine Schreib-/Leseeinrichtung (28) und die Übergabeeinrichtung (30) in dem vorderen Gestellsegment (110) angeordnet sind.

10. Datenspeichereinrichtung nach Anspruch 8 oder 9, **dadurch gekennzeichnet, daß** die Datenspeichersteuerung (14) und der mindestens eine Festplattenspeicher (50) in dem hinteren Gestellsegment (112) angeordnet sind.

11. Datenspeichereinrichtung nach Anspruch 10, **dadurch gekennzeichnet, daß** das hintere Gestellsegment (112) Aufnahmen (120) für die Datenspeichersteuerung (14) und den mindestens einen Festplattenspeicher (50) aufweist, deren Frontseiten (116) auf einer Seite des Gestells (12) liegen.

12. Datenspeichereinrichtung nach Anspruch 10 oder 11, **dadurch gekennzeichnet, daß** die Aufnahmen (120) für die Datenspeichersteuerung (14) und den mindestens einen Festplattenspeicher (50) in vertikaler Richtung (84) übereinanderliegend angeordnet sind.

13. Datenspeichereinrichtung nach einem der Ansprüche 10 bis 12, **dadurch gekennzeichnet, daß** die Datenspeichersteuerung (14) so angeordnet ist, daß deren Flachseite mit größter Ausdehnung parallel zu der Flachseite der Gestellsegmente verläuft.

14. Datenspeichereinrichtung nach einem der Ansprüche 8 bis 13, **dadurch gekennzeichnet, daß** das hintere Gestellsegment (112) einen Verschaltungsraum (130) bildet, an welchen die Aufnahmen (120) für die Datenspeichersteuerung (14) und den mindestens einen Festplattenspeicher (50) mit ihrer Rückseite (118) angrenzen.

15. Datenspeichereinrichtung nach Anspruch 14, **dadurch gekennzeichnet, daß** der Verschaltungsraum (130) der Frontseite (116) der Aufnahmen (120) gegenüberliegend im hinteren Gestellsegment (112) liegt.

16. Datenspeichereinrichtung nach einem der Ansprüche 8 bis 15, **dadurch gekennzeichnet, daß** das vordere Gestellsegment (110) mindestens eine Aufnahme (70) für die mindestens eine Schreib-/Leseeinheit aufweist und daß die Aufnahme (70) mit einer Rückseite an den Verschaltungsraum (130) im hinteren Gestellsegment (112) angrenzt.

17. Datenspeichereinrichtung nach Anspruch 16, **dadurch gekennzeichnet, daß** das vordere Gestellsegment (110) mehrere Aufnahmen (70) für mehrere Schreib-/Leseeinheiten (28) aufweist, die alle mit ihrer Rück-seite an den Verschaltungsraum (130) angrenzen.

18. Datenspeichereinrichtung nach Anspruch 16 oder 17, **dadurch gekennzeichnet, daß** die Aufnahmen (70) für die Schreib-/Leseeinheiten (28) übereinanderliegend angeordnet sind.

19. Datenspeichereinrichtung nach einem der Ansprüche 16 bis 18, **dadurch gekennzeichnet, daß** die in den Aufnahmen (70) angeordneten Schreib-/Leseeinheiten (28) mit ihren Rückseiten (132) in den Verschaltungsraum (130) hineinragen.

20. Datenspeichereinrichtung nach einem der voranstehenden Ansprüche, **dadurch gekennzeichnet, daß** die Aufbewahrungseinheit (22) einzelne Speicherfächer (26) zur Aufnahme der Datenträgerkassetten (24) aufweist.

21. Datenspeichereinrichtung nach Anspruch 20, **dadurch gekennzeichnet, daß** die Speicherfächer (26) mit Einlegeöffnungen (74) versehen sind, die alle in einer Speicherebene (76) angeordnet sind.

22. Datenspeichereinrichtung nach einem der voranstehenden Ansprüche, **dadurch gekennzeichnet, daß** die Schreib-/Leseeinrichtungen (28) Einlegeschächte (36) aufweisen, deren Einlegeöffnungen alle in einer Einlegeebene (78) liegen.

23. Datenspeichereinrichtung nach einem der voranstehenden Ansprüche, **dadurch gekennzeichnet, daß** die Übergabeeinrichtung (30) so ausgebildet ist, daß mit dieser ein Greifer (32) in einer Handhabungsebene (94) bewegbar ist.

24. Datenspeichereinrichtung nach Anspruch 23, **dadurch gekennzeichnet, daß** die Handhabungsebene (94) parallel zur Speicherebene (76) und parallel zur Einlegeebene (78) verläuft.

25. Datenspeichereinrichtung nach Anspruch 23 oder 24, **dadurch gekennzeichnet, daß** die Speicherebene (76), die Einlegeebene (78) und die Handhabungsebene (94) parallel zu einer Frontseite (111) des vorderen Gestellsegments (110) verlaufen.

26. Datenspeichereinrichtung nach einem der Ansprüche 4 bis 25, **dadurch gekennzeichnet, daß** das Gehäuse (170) eine Frontwand (180) aufweist, in welcher ein mit der Datenspeichersteuerung (14) zusammenwirkender Bildschirm (182) angeordnet ist.

27. Datenspeichereinrichtung nach einem der Ansprüche 4 bis 26, **dadurch gekennzeichnet, daß** im Bereich der Frontwand (180) des Gehäuses (170) ein Tastenfeld (186) zur Kommunikation mit der Datenspeichersteuerung (14) angeordnet ist.

28. Datenspeichereinrichtung nach Anspruch 27, **dadurch gekennzeichnet, daß** das Tastenfeld (186) in eine Tastenfeldaufnahme (188) in der Frontwand (180) des Gehäuses (170) einklappbar und aus dieser ausklappbar ist.
